# EUROPEAN PATENT APPLICATION

(11) **EP 4 604 241 A1**
(43) Date of publication of application: **20.08.2025**
(21) Application number: 23924677.0
(22) Date of filing: 02.03.2023
(51) Int. Cl.: H01M 10/0525, H01M 4/587, H01M 10/054

(54) **SODIUM BATTERY CELL, BATTERY, AND ELECTRIC DEVICE**

(71) Applicant: Contemporary Amperex Technology (Hong Kong) Limited, Central (HK)
(72) Inventor: ZOU, Hailin, Ningde, Fujian 352100 (CN); TIE, Zhiwei, Ningde, Fujian 352100 (CN); CHEN, Peipei, Ningde, Fujian 352100 (CN)
(74) Representative: Behr, Wolfgang
(86) International application number: PCT/CN2023/079246
(87) International publication number: WO 2024/178708

(57) **Abstract**

Embodiments of this application provide a sodium battery cell, a battery, and a power consuming apparatus. The sodium battery cell includes: a negative electrode plate, a positive electrode plate, and an electrolyte solution. The negative electrode plate includes a negative electrode current collector and a negative electrode film layer. The positive electrode plate includes a positive electrode current collector and a positive electrode film layer. At least one of the negative electrode film layer, the positive electrode film layer, and the electrolyte solution includes a lithium-containing compound. The technical solution of this application can improve the cycle performance of the sodium battery cell.

## Description

### TECHNICAL FIELD

This application relates to the technical field of batteries, and in particular, to a sodium battery cell, a battery, and a power consuming apparatus.

### BACKGROUND

In recent years, with the gradual development and application of lithium-ion batteries from portable electronic devices to high-power electric vehicles, large-scale energy storage power stations, smart grids, and the like, the demand for metal lithium is increasing in all industries. However, with the dwindling reserves and increasing mining difficulty of metal lithium resources, existing metal lithium resources have been unable to match requirements of the lithium battery industry. Sodium, which is in the same main group as lithium, has similar chemical properties to lithium and is abundant in reserves. Therefore, sodium-ion batteries that work in a similar way to lithium-ion batteries are being developed, and are expected to be an important supplement for lithium-ion batteries in large-scale energy storage applications.

Therefore, how to improve the cycle performance of sodium-ion batteries is an urgent problem to be resolved.

### SUMMARY

This application is proposed in view of the above problems, and an objective thereof is to provide a sodium battery cell, a battery, and a power consuming apparatus, to improve the cycle performance of the sodium battery cell.

According to a first aspect of this application, a sodium battery cell is provided, including: a negative electrode plate, a positive electrode plate, and an electrolyte solution, where the negative electrode plate includes a negative electrode current collector and a negative electrode film layer; the positive electrode plate includes a positive electrode current collector and a positive electrode film layer; and at least one of the negative electrode film layer, the positive electrode film layer, and the electrolyte solution includes a lithium-containing compound.

In the embodiments of this application, the sodium battery cell includes a negative electrode plate, a positive electrode plate, and an electrolyte solution. Further, the negative electrode plate includes a negative electrode current collector and a negative electrode film layer, and the positive electrode plate includes a positive electrode current collector and a positive electrode film layer. At least one of the negative electrode film layer, the positive electrode film layer, and the electrolyte solution includes a lithium-containing compound. By causing at least one of the negative electrode film layer, the positive electrode film layer, and the electrolyte solution of the sodium battery cell to include a lithium-containing compound, the sodium battery cell will form a solid electrolyte interphase film (SEI film) partially including lithium alkyl carbonate, and compared with an SEI film whose component is almost all of the sodium alkyl carbonate, the solubility of the SEI film partially including lithium alkyl carbonate in the electrolyte solution is lower, which can improve the stability of the SEI film and reduce a probability of occurrence of a side reaction between the electrolyte solution and a negative electrode, thereby prolonging the cycle life of the sodium battery, that is, improving the cycle performance of the sodium battery.

In a possible implementation, the negative electrode film layer includes a negative electrode active material core and the lithium-containing compound covering the negative electrode active material core.

In the embodiments of this application, when the negative electrode film layer of the sodium battery cell includes the lithium-containing compound, forms of the lithium-containing compound and a negative electrode active material are as follows: the negative electrode active material is a core, and the lithium-containing compound covers the negative electrode active material core. By causing the negative electrode film layer to include the negative electrode active material core and the lithium-containing compound covering the negative electrode active material core, that is, causing the lithium-containing compound to cover the negative electrode active material core, a more stable lithium-containing compound can be formed in the SEI film when the sodium battery forms the SEI film, thereby improving the stability of the SEI film and improving the cycle performance of the battery.

In a possible implementation, the negative electrode active material core includes amorphous carbon.

In the embodiments of this application, by causing the negative electrode active material of the sodium battery cell to be amorphous carbon, sodium ions can be better deintercalated from the negative electrode active material, thereby further improving the performance of the sodium battery.

In a possible implementation, based on 100 parts by weight of the negative electrode film layer, content of the lithium-containing compound ranges from 0.05 to 15 parts by weight, and optionally ranges from 0.1 to 5 parts by weight.

In the embodiments of this application, by causing a mass percentage of the lithium-containing compound in the negative electrode film layer to range from 0.05% to 15%, especially range from 0.1% to 5%, sufficient lithium can be provided for the sodium battery to reduce the solubility of the SEI film of the sodium battery in the electrolyte solution to the maximum extent, thereby further improving the performance of the sodium battery.

In a possible implementation, based on 100 parts by weight of the positive electrode film layer, content of the lithium-containing compound ranges from 0.1 to 20 parts by weight, and optionally ranges from 0.5 to 10 parts by weight.

In the embodiments of this application, by causing a mass percentage of the lithium-containing compound in the positive electrode film layer to range from 0.1% to 20%, especially range from 0.5% to 10%, sufficient lithium can be provided for the sodium battery to reduce the solubility of the SEI film of the sodium battery in the electrolyte solution to the maximum extent, thereby further improving the performance of the sodium battery.

In a possible implementation, based on 100 parts by weight of the electrolyte solution, content of the lithium-containing compound ranges from 0.01 to 15 parts by weight, and optionally ranges from 0.1 to 5 parts by weight.

In the embodiments of this application, by causing a mass percentage of the lithium-containing compound in the electrolyte solution to range from 0.01% to 15%, especially range from 0.1% to 5%, sufficient lithium can be provided for the sodium battery to reduce the solubility of the SEI film of the sodium battery in the electrolyte solution to the maximum extent, thereby further improving the performance of the sodium battery.

In a possible implementation, in the negative electrode plate, a ratio of mass content of lithium to mass content of sodium ranges from 0.0001 to 1, and optionally ranges from 0.01 to 0.5.

In the embodiments of this application, a sodium compound in the SEI film is more soluble than a lithium compound, so that the ratio of the mass content of lithium to the mass content of sodium in the negative electrode plate directly determines the solubility of the SEI film in the electrolyte solution. When the ratio of the mass content of lithium to the mass content of sodium in the negative electrode plate is less than 0.0001, the SEI film almost completely includes sodium-containing compounds, and the SEI film is still continuously dissolved in the electrolyte solution. When the ratio of the mass content of lithium to the mass content of sodium in the negative electrode plate is greater than 1, the negative electrode plate contains a large quantity of lithium-containing compounds such as lithium alkyl carbonate, lithium carbonate, and lithium fluoride, and since a radius of a sodium ion is greater than a radius of a lithium ion, conductivity of the lithium-containing compounds such as lithium alkyl carbonate, lithium carbonate, and lithium fluoride to sodium ions deteriorates, severely deteriorating interface impedance and affecting power of the sodium battery. By causing the ratio of the mass content of lithium to the mass content of sodium in the negative electrode plate of the sodium battery to range from 0.0001 to 1, and especially range from 0.01 to 0.5, the sodium battery can have longer-cycle performance and higher power.

In a possible implementation, the lithium-containing compound includes at least one of lithium alkyl carbonate, lithium fluoride, lithium carbonate, lithium sulfate, lithium nitrate, lithium hydroxide, lithium chloride, lithium perchlorate, lithium hexafluorophosphate, lithium difluorophosphate, lithium phosphate, lithium tetrafluoroborate, lithium bisoxalate borate, lithium difluorooxalate borate, lithium difluorooxalate phosphate, lithium iron phosphate, lithium cobaltate, lithium nickel manganese cobalt oxide, and lithium manganate.

In the embodiments of this application, the lithium-containing compound is added to at least one of the positive electrode film layer, the negative electrode film layer, and the electrolyte solution, and the lithium-containing compound includes at least one of lithium alkyl carbonate, lithium fluoride, lithium carbonate, lithium sulfate, lithium nitrate, lithium hydroxide, lithium chloride, lithium perchlorate, lithium hexafluorophosphate, lithium difluorophosphate, lithium phosphate, lithium tetrafluoroborate, lithium bisoxalate borate, lithium difluorooxalate borate, lithium difluorooxalate phosphate, lithium iron phosphate, lithium cobaltate, lithium nickel manganese cobalt oxide, and lithium manganate. Lithium in the lithium salt materials is deintercalated from the materials and transferred into the electrolyte solution, and a double decomposition reaction occurs between the lithium salt in the electrolyte solution and the sodium-containing compound on the negative electrode. In this way, the solubility of the SEI film in the electrolyte solution can be effectively reduced, thereby improving the stability of the SEI film and the performance of the battery.

In a possible implementation, the electrolyte solution includes fluoroethylene carbonate.

In the embodiments of this application, the lithium-containing compound has large material brittleness, and a volume of the active material will expand during cycling, which causes the active material to which the lithium-containing compound is added to crack. By adding the fluoroethylene carbonate to the electrolyte solution, an organic polymer may be formed on an interface of the negative electrode. The organic polymer has good toughness, so that interfaces of the positive electrode and the negative electrode can withstand shrinkage, thereby preventing the negative electrode material from cracking due to expansion.

In a possible implementation, based on 100 parts by weight of the electrolyte solution, content of the fluoroethylene carbonate ranges from 0.01 to 10 parts by weight, and optionally ranges from 0.1 to 5 parts by weight.

In the embodiments of this application, in order to enable the positive or negative electrode active material to which the lithium-containing compound is added to withstand shrinkage, the fluoroethylene carbonate is added to the electrolyte solution. However, the thermal stability of the fluoroethylene carbonate is poor, and acidic substances produced by decomposition will severely deteriorate gas production. In addition, excessive addition of the fluoroethylene carbonate will form a thicker SEI film, which is likely to lead to sodium precipitation in the sodium battery. By causing mass content of the fluoroethylene carbonate in the electrolyte solution to range from 0.01% to 10%, and especially range from 0.1% to 5%, the fluoroethylene carbonate can play a role in causing the SEI film to withstand shrinkage without affecting the performance of the sodium battery.

According to a second aspect of this application, a battery is provided, including the sodium battery cell according to any one of the embodiments in the first aspect of this application.

According to a third aspect of this application, a power consuming apparatus is provided, including the sodium battery cell according to any one of the embodiments in the first aspect of this application or the battery according to the second aspect.

### BRIEF DESCRIPTION OF THE DRAWINGS

In order to describe the technical solutions of the embodiments of this application more clearly, the accompanying drawings required in the embodiments of this application are briefly described. Apparently, the accompanying drawings described below are only some embodiments of this application. For a person of ordinary skill in the art, other accompanying drawings can be further obtained based on the accompanying drawings without creative efforts.
FIG. 1 is a schematic structural diagram of a sodium battery cell according to an implementation of this application.
FIG. 2 is a schematic diagram of a sodium battery cell according to an implementation of this application.
FIG. 3 is a schematic structural diagram of a sodium battery cell according to another implementation of this application.
FIG. 4 is a schematic structural diagram of a sodium battery according to an implementation of this application.
FIG. 5 is a schematic structural diagram of a power consuming apparatus according to an implementation of this application.

### DETAILED DESCRIPTION

The following properly describes implementations of an electrode assembly, a battery cell, a battery, and a power consuming apparatus of this application in detail with reference to the accompanying drawings, but there are situations where unnecessary detailed description is omitted. For example, there are situations where detailed description of well-known matters and repeated description of the same structure are omitted. In addition, the accompanying drawings and the following description are provided for a person skilled in the art to fully understand this application and are not intended to limit the subject matter recorded in the claims.

A "range" disclosed in this application are defined in the form of a lower limit and an upper limit, and a given range is defined by selecting a lower limit and an upper limit, where the selected lower and upper limits define boundaries of the selected range. The range limited in this way can include or exclude end values, and can be arbitrarily combined, that is, any lower limit can be combined with any upper limit to form a range. For example, if a range of 60 to 120 and a range of 80 to 110 are listed for a specific parameter, it is also expected to be understood as a range of 60 to 110 and a range of 80 to 120. In addition, if minimum range values 1 and 2 are listed and maximum range values 3, 4, and 5 are listed, the following ranges can all be expected: 1 to 3, 1 to 4, 1 to 5, 2 to 3, 2 to 4, and 2 to 5. In this application, unless otherwise specified, a value range "a to b" represents an abbreviated representation of any combination of real numbers between a and b, where a and b are both real numbers. For example, a value range "0 to 5" indicates that all real numbers between "0 to 5" have been listed in this specification, and "0 to 5" is only an abbreviated representation of these value combinations. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all implementations and optional implementations of this application can be combined to form new technical solutions.

Unless otherwise specified, all technical features and optional technical features of this application can be combined to form new technical solution.

Unless otherwise specified, all the steps in this application can be performed sequentially or randomly, and optionally, are performed sequentially. For example, the method including steps (a) and (b) indicates that the method may include steps (a) and (b) performed sequentially, or the method may include steps (b) and (a) performed sequentially. For example, that the method may further include step (c) indicates that step (c) may be added to the method in any sequence. For example, the method may include steps (a), (b), and (c), or may include steps (a), (c), and (b), or may include steps (c), (a), and (b).

Unless otherwise specified, the terms "include" and "comprise" mentioned in this application may be open or closed. For example, the terms "include" and "comprise" may indicate that other components not listed may further be include or contained, or only listed components may be included or contained.

The term "above", "below", "greater than", or "less than" used in this application includes a number itself. For example, "at least one" means one or more, and "at least one of A and B" means "A", "B", or "A and B".

Unless otherwise specified, in this application, the term "or" is inclusive. For example, the phrase "A or B" means "A, B, or both A and B". More specifically, any one of the following conditions satisfies the condition "A or B": A is true (or exists) and B is false (or does not exist); A is false (or does not exist) and B is true (or exists); or both A and B are true (or exist).

A structure of a sodium battery is similar to that of a lithium battery, and includes a positive electrode and a negative electrode that can deintercalate sodium ions, and an electrolyte solution for transmitting the sodium ions. Similar to the lithium battery, during first charging, products of reduction decomposition of the electrolyte solution will form a solid electrolyte interphase film (SEI film) on an interface of the negative electrode to prevent further reduction decomposition of the electrolyte solution. Therefore, the performance of this SEI film directly affects the performance of the sodium battery.

Main components of the SEI film formed on the interface of the negative electrode of the sodium battery include sodium alkyl carbonate, sodium carbonate, and sodium fluoride. Compared with lithium alkyl carbonate as the main component of the SEI film of the lithium battery, sodium alkyl carbonate as the main component of the SEI film of the sodium battery has larger solubility in the electrolyte solution, so that the electrolyte solution continuously undergoes a side reaction with the negative electrode, which makes the SEI film of the sodium battery very unstable. As a result, the cycle performance of the sodium battery can hardly meet an actual application requirement.

At present, there are several main technical means to resolve the above problems: (1) Fluoroethylene carbonate (FEC) is added to the electrolyte solution. The FEC can synergize with the electrolyte solution to improve the stability of the SEI of the sodium battery. However, polymerized organic substances formed by reduction of the FEC at the negative electrode severely deteriorates the internal resistance of the battery. In addition, these sodium-containing organic substances still have strong solubility in the electrolyte solution, and the cycle performance of the battery is not improved significantly. (2) An organic framework/graphene composite organic material is constructed to reduce dissolution of the SEI film in the electrolyte solution. However, the organic framework and graphene are both costly, and are not suitable for large-scale application in industrial production. (3) The negative electrode material is covered with a layer of fluorine-containing compound to help better formation of the SEI film in the sodium battery. However, a process of covering the carbon negative electrode material with a layer of fluorine-containing compound is complicated, the costs are still very high, and the cycle performance is not improved significantly. Therefore, how to cause the sodium battery to have better cycle performance is an important technical problem that needs to be resolved urgently at present.

The following describes a sodium battery cell, a battery, and a power consuming apparatus of this application with reference to the accompanying drawings.

The sodium battery described in this application includes a sodium-ion battery and a sodium metal battery. The following implementations are described by using a sodium-ion battery as an example, but the technical solutions of this application are not limited to the sodium-ion battery.

### [Sodium battery cell]

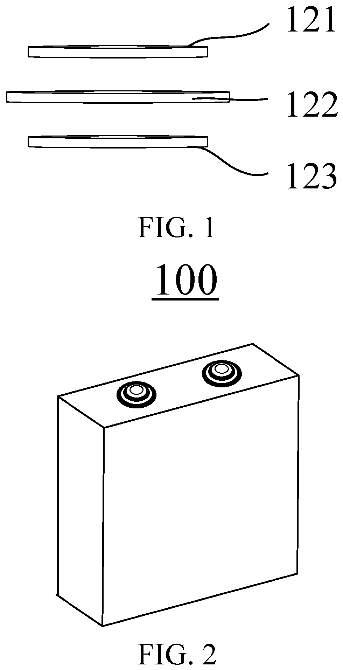

According to a first aspect of this application, a sodium battery cell is provided. FIG. 1 is a schematic structural diagram of a sodium battery cell according to an implementation of this application. As shown in FIG. 1, the sodium battery cell 100 includes: a negative electrode plate 121, a positive electrode plate 123, an electrolyte solution, and a separator 122. The negative electrode plate 121 includes a negative electrode current collector and a negative electrode film layer. The positive electrode plate 123 includes a positive electrode current collector and a positive electrode film layer. At least one of the negative electrode film layer, the negative electrode film layer, and the electrolyte solution includes a lithium-containing compound.

At least one of the negative electrode film layer, the negative electrode film layer, and the electrolyte solution includes the lithium-containing compound, that is, the lithium-containing compound is added to the sodium battery cell 100, which can improve the cycle performance of the sodium battery cell 100.

In the foregoing solution, by causing at least one of the negative electrode film layer, the positive electrode film layer, and the electrolyte solution of the sodium battery cell 100 to include the lithium-containing compound, the sodium battery cell 100 will form an SEI film partially including lithium alkyl carbonate and lithium fluoride. Compared with an SEI film whose component almost completely includes the sodium alkyl carbonate, the solubility of the SEI film partially including lithium alkyl carbonate and lithium fluoride in the electrolyte solution is lower, which can improve the stability of the SEI film and reduce a probability of occurrence of a side reaction between the electrolyte solution and a negative electrode, thereby prolonging the cycle life of the sodium battery, that is, improving the cycle performance of the sodium battery.

Generally, the sodium battery cell 100 includes a positive electrode plate 123, a separator 122, a negative electrode plate 121, and an electrolyte solution. During charging and discharging of a battery, active ions are intercalated and deintercalated back and forth between a positive electrode and a negative electrode. An electrolyte plays a role in conducting ions between the positive electrode and the negative electrode. The separator 122 is arranged between the positive electrode plate 123 and the negative electrode plate 121, mainly plays a role in preventing a short circuit between the positive electrode and the negative electrode, and allows the ions to pass through.

It should be noted herein that the "positive electrode plate" and the "negative electrode plate" mentioned in the embodiments of this application refer to the entirety of the positive electrode plate and the negative electrode plate including an active material, a current collector, or another additive.

In some implementations, the negative electrode film layer includes a negative electrode active material core and the lithium-containing compound covering the negative electrode active material core.

In the foregoing solution, when the negative electrode film layer of the sodium battery cell 100 includes the lithium-containing compound, forms of the lithium-containing compound and a negative electrode active material are as follows: the negative electrode active material is a core, and the lithium-containing compound covers the negative electrode active material core. By causing the negative electrode film layer to include the negative electrode active material core and the lithium-containing compound covering the negative electrode active material core, that is, causing the lithium-containing compound to cover the negative electrode active material core, a more stable lithium-containing compound can be formed in the SEI film when the sodium battery forms the SEI film, thereby improving the stability of the SEI film and improving the cycle performance of the sodium battery.

In the embodiments of this application, the lithium-containing compound may cover the negative electrode active material core continuously or discontinuously, which is not limited in this application.

In the embodiments of this application, the lithium-containing compound and the negative electrode active material may be directly and uniformly mixed.

In some implementations, the negative electrode active material core includes amorphous carbon.

In the foregoing solution, by causing the negative electrode active material of the sodium battery cell 100 to be amorphous carbon, sodium ions can be better deintercalated from the negative electrode active material, thereby further improving the performance of the sodium battery.

In some implementations, based on 100 parts by weight of the negative electrode film layer, content of the lithium-containing compound ranges from 0.05 to 15 parts by weight, and optionally ranges from 0.1 to 5 parts by weight.

In the foregoing solution, by causing a mass percentage of the lithium-containing compound in the negative electrode film layer to range from 0.05% to 15%, especially range from 0.1% to 5%, sufficient lithium can be provided for the sodium battery cell 100 to reduce the solubility of the SEI film of the sodium battery in the electrolyte solution to the maximum extent, thereby further improving the performance of the sodium battery.

In some implementations, based on 100 parts by weight of the positive electrode film layer, content of the lithium-containing compound ranges from 0.1 to 20 parts by weight, and optionally ranges from 0.5 to 10 parts by weight.

In the foregoing solution, by causing a mass percentage of the lithium-containing compound in the positive electrode film layer to range from 0.1% to 20%, especially range from 0.5% to 10%, sufficient lithium can be provided for the sodium battery cell 100 to reduce the solubility of the SEI film of the sodium battery in the electrolyte solution to the maximum extent, thereby further improving the performance of the sodium battery.

In the embodiments of this application, the lithium-containing compound and a positive electrode active material may be directly and uniformly mixed.

In some implementations, based on 100 parts by weight of the electrolyte solution, content of the lithium-containing compound ranges from 0.01 to 15 parts by weight, and optionally ranges from 0.1 to 5 parts by weight.

In the foregoing solution, by causing a mass percentage of the lithium-containing compound in the electrolyte solution to range from 0.01% to 15%, especially range from 0.1% to 5%, sufficient lithium can be provided for the sodium battery cell 100 to reduce the solubility of the SEI film of the sodium battery in the electrolyte solution to the maximum extent, thereby further improving the performance of the sodium battery.

In the embodiments of this application, the lithium-containing compound may be directly added to the electrolyte solution.

In some implementations, in the negative electrode plate 121, a ratio of mass content of lithium to mass content of sodium ranges from 0.0001 to 1, and optionally ranges from 0.01 to 0.5.

In the foregoing solution, a sodium compound in the SEI film is more soluble than a lithium compound, so that the ratio of the mass content of lithium to the mass content of sodium in the negative electrode plate 121 directly determines the solubility of the SEI film in the electrolyte solution. When the ratio of the mass content of lithium to the mass content of sodium in the negative electrode plate 121 is less than 0.0001, the SEI film almost completely includes sodium-containing compounds, and is still continuously dissolved in the electrolyte solution. When the ratio of the mass content of lithium to the mass content of sodium in the negative electrode plate 121 is greater than 1, the negative electrode plate 121 contains a large quantity of lithium-containing compounds such as lithium alkyl carbonate, lithium carbonate, and lithium fluoride, and since a radius of a sodium ion is greater than a radius of a lithium ion, conductivity of the lithium-containing compounds such as lithium alkyl carbonate, lithium carbonate, and lithium fluoride to sodium ions deteriorates, severely deteriorating interface impedance and affecting power of the sodium battery. By causing the ratio of the mass content of lithium to the mass content of sodium in the negative electrode plate 121 of the sodium battery to range from 0.0001 to 1, and especially range from 0.01 to 0.5, the sodium battery can have longer-cycle performance and higher power.

It should be noted herein that a state of the sodium battery with the mass ratio of lithium to sodium defined herein is that the sodium battery cell 100 has undergone a first charge and discharge cycle, that is, a charge and discharge cycle of the sodium battery cell 100 after the SEI formation stage.

In some implementations, the lithium-containing compound includes at least one of lithium alkyl carbonate, lithium fluoride, lithium carbonate, lithium sulfate, lithium nitrate, lithium hydroxide, lithium chloride, lithium perchlorate, lithium hexafluorophosphate, lithium difluorophosphate, lithium phosphate, lithium tetrafluoroborate, lithium bisoxalate borate, lithium difluorooxalate borate, lithium difluorooxalate phosphate, lithium iron phosphate, lithium cobaltate, lithium nickel manganese cobalt oxide, and lithium manganate.

In the foregoing solution, the lithium-containing compound is added to at least one of the positive electrode film layer, the negative electrode film layer, and the electrolyte solution, and the lithium-containing compound includes at least one of lithium alkyl carbonate, lithium fluoride, lithium carbonate, lithium sulfate, lithium nitrate, lithium hydroxide, lithium chloride, lithium perchlorate, lithium hexafluorophosphate, lithium difluorophosphate, lithium phosphate, lithium tetrafluoroborate, lithium bisoxalate borate, lithium difluorooxalate borate, lithium difluorooxalate phosphate, lithium iron phosphate, lithium cobaltate, lithium nickel manganese cobalt oxide, and lithium manganate. Lithium in the lithium salt materials is deintercalated from the materials and transferred into the electrolyte solution, and a double decomposition reaction occurs between the lithium salt in the electrolyte solution and the sodium-containing compound on the negative electrode. In this way, the solubility of the SEI film in the electrolyte solution can be effectively reduced, thereby improving the stability of the SEI film and the performance of the battery.

In some implementations, the electrolyte solution includes fluoroethylene carbonate.

In the foregoing solution, the lithium-containing compound has large material brittleness, and a volume of the active material will expand during cycling, which causes the active material to which the lithium-containing compound is added to crack. By adding the fluoroethylene carbonate to the electrolyte solution, an organic polymer may be formed on an interface of the negative electrode. The organic polymer has good toughness, so that interfaces of the positive electrode and the negative electrode can withstand shrinkage, thereby preventing the negative electrode material from cracking due to expansion.

In some implementations, based on 100 parts by weight of the electrolyte solution, content of the fluoroethylene carbonate ranges from 0.01 to 10 parts by weight, and optionally ranges from 0.1 to 5 parts by weight.

In the foregoing solution, in order to enable the positive or negative electrode active material to which the lithium-containing compound is added to withstand shrinkage, the fluoroethylene carbonate is added to the electrolyte solution. However, the thermal stability of the fluoroethylene carbonate is poor, and acidic substances produced by decomposition will severely deteriorate gas production. In addition, excessive addition of the fluoroethylene carbonate will form a thicker SEI film, which is likely to lead to sodium precipitation in the sodium battery. By causing mass content of the fluoroethylene carbonate in the electrolyte solution to range from 0.01% to 10%, and especially range from 0.1% to 5%, the fluoroethylene carbonate can play a role in causing the SEI film to withstand shrinkage without affecting the performance of the sodium battery.

### [Positive electrode plate]

The positive electrode plate 123 includes a positive electrode current collector and a positive electrode film layer arranged on at least one surface of the positive electrode current collector, the positive electrode film layer includes a positive electrode active material, and the positive electrode film layer may further include the lithium-containing compound described in the foregoing embodiments.

As an example, the positive electrode current collector has two opposite surfaces in its own thickness direction, and the positive electrode film layer is provided on any one or both of the two opposite surfaces of the positive electrode current collector.

In some implementations, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the positive electrode active material may be a well-known positive electrode active material used for a battery in the art. As an example, the positive electrode active material may include at least one of the following materials: sodium transition metal oxide, a polyanionic compound, and a Prussian blue compound. However, this application is not limited to such materials, and may alternatively use other conventional materials that can be used as positive electrode active materials of the battery. These positive electrode active materials can be used alone, or two or more of the positive electrode active materials may be combined for use.

In some implementations, transition metal in the sodium transition metal oxide may be at least one of Mn, Fe, Ni, Co, Cr, Cu, Ti, Zn, V, Zr, and Ce. The sodium transition metal oxide is, for example, NaₓMO₂, where M includes one or more of Ti, V, Mn, Co, Ni, Fe, Cr, and Cu, and 0<x≤1.

In some implementations, the polyanionic compound may be a type of compound including sodium ions, transition metal ions, and tetrahedral (YO₄)ⁿ⁻ anion units. The transition metal may be at least one of Mn, Fe, Ni, Co, Cr, Cu, Ti, Zn, V, Zr, and Ce; Y may be at least one of P, S, and Si; and n represents a valence of (YO₄)ⁿ⁻. The polyanionic compound may alternatively be a type of compound including sodium ions, transition metal ions, tetrahedral (YO₄)ⁿ⁻ anion units, and halogen anions. The transition metal may include at least one of Mn, Fe, Ni, Co, Cr, Cu, Ti, Zn, V, Zr, and Ce; Y may include at least one of P, S, and Si, and n represents a valence of (YO₄)ⁿ⁻; and the halogen may include at least one of F, Cl, and Br. The polyanionic compound may alternatively be a type of compound including sodium ions, tetrahedral (YO₄)ⁿ⁻ anion units, polyhedral units (ZO_{y})^{m+}, and optional halogen anions. Y may include at least one of P, S, and Si, and n represents a valence of (YO₄)ⁿ⁻; Z represents transition metal and includes at least one of Mn, Fe, Ni, Co, Cr, Cu, Ti, Zn, V, Zr, and Ce, and m represents a valence of (ZO_{y})^{m+}; and the halogen may include at least one of F, Cl, and Br. The polyanionic compound is, for example, at least one of NaFePO₄, Na₃V₂(PO₄)₃ (sodium vanadium phosphate, referred to as NVP for short), Na₄Fe₃(PO₄)₂(P₂O₇), NaM'PO₄F (M' includes one or more of V, Fe, Mn, and Ni), and Na₃(VO_{y})₂(PO₄)₂F_{3-2y} (0≤y≤1).

In some implementations, the Prussian blue compound may be a type of compound including sodium ions, transition metal ions, and cyanide ions (CN⁻). The transition metal may include at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' each independently include at least one of Ni, Cu, Fe, Mn, Co, and Zn, and 0<a≤2, 0<b<1, and 0<c<1.

In some implementations, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

The positive electrode plate 123 in this application may be prepared according to a conventional method in the art. For example, the positive electrode film layer is usually formed by applying a positive electrode slurry on the positive electrode current collector, and drying and cold pressing the positive electrode slurry. The positive electrode slurry is usually formed by dispersing a positive electrode material, an optional conductive agent, an optional binder, and any other components in a solvent and stirring these components uniformly. The solvent may be, but is not limited to, N-methyl pyrrolidone (NMP).

In the positive electrode plate 123 of this application, other additional functional layers other than the positive electrode film layer are not excluded. For example, in some implementations, the positive electrode plate 123 of this application further includes a conductive undercoat layer (for example, made by a conductive agent and a binder) clamped between the positive electrode current collector and the positive electrode film layer and arranged on a surface of the positive electrode current collector. In some other implementations, the positive electrode plate 123 of this application further includes a protective layer covering the surface of the positive electrode film layer.

### [Negative electrode plate]

The negative electrode plate 121 includes a negative electrode current collector and a negative electrode film layer arranged on at least one surface of the negative electrode current collector, the negative electrode film layer includes a negative electrode active material, and the negative electrode film layer may further include the lithium-containing compound described in the foregoing embodiments.

As an example, the negative electrode current collector has two opposite surfaces in its own thickness direction, and the negative electrode film layer is provided on any one or both of the two opposite surfaces of the negative electrode current collector.

In some implementations, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some implementations, the negative electrode active material may be a well-known negative electrode active material used for a battery in the art. As an example, the negative electrode active material may include at least one of the following materials: artificial graphite, natural graphite, soft carbon, hard carbon, a silicon-based material, a tin-based material, and the like. The silicon-based material may be at least one selected from elemental silicon, silicon oxide, silicon-carbon composite, silicon-nitrogen composite, and silicon alloy. The tin-based material may be at least one selected from elemental tin, tin oxide, and tin alloy. However, this application is not limited to such materials, and may alternatively use other conventional materials that can be used as negative electrode active materials of the battery. These negative electrode active materials may be used alone, or two or more of the negative electrode active materials may be combined for use.

In some implementations, the negative electrode film layer further optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may be at least one selected from superconducting carbon, acetylene black, carbon black, Ketjen black, carbon dot, carbon nanotube, graphene, and carbon nanofiber.

In some implementations, the negative electrode film layer further optionally includes another auxiliary such as a thickener (for example, carboxymethyl cellulose sodium (CMC-Na)).

The negative electrode plate 121 in this application may be prepared according to a conventional method in the art. For example, the negative electrode film layer is usually formed by applying a negative electrode slurry on the negative electrode current collector, and drying and cold pressing the negative electrode slurry. The negative electrode slurry is usually formed by dispersing a negative electrode material, an optional conductive agent, an optional binder, and any other components in a solvent and stirring these components uniformly. The solvent may be, but is not limited to, N-methyl pyrrolidone (NMP).

### [Electrolyte solution]

The electrolyte solution plays a role in conducting ions between the positive electrode plate 123 and the negative electrode plate 121. In an implementation of this application, the electrolyte solution may include fluoroethylene carbonate (FEC) and the lithium-containing compound described in any one of the foregoing implementations.

In some implementations, the electrolyte solution includes an organic solvent, an electrolyte sodium salt, and an optional additive. The types of the organic solvent, the electrolyte sodium salt, and the additive are not specifically limited, and can be selected according to requirements.

In some implementations, as an example, the electrolyte salt includes but is not limited to at least one of NaPF₆, NaClO₄, NaBCl₄, NaSO₃CF₃, and Na(CH₃)C₆H₄SO₃. One of the foregoing electrolyte salts may be used alone, or two or more of the foregoing electrolyte salts may be used simultaneously.

In some implementations, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE). One of the foregoing organic solvents may be used alone, or two or more of the foregoing organic solvents may be used simultaneously. Optionally, two or more of the foregoing organic solvents are used simultaneously.

In some implementations, the additive may include a negative electrode film-forming additive and a positive electrode film-forming additive, and may further include an additive that can improve specific performance of the battery, such as an additive for improving overcharge performance of the battery and an additive for improving high-temperature or low-temperature performance of the battery.

In some implementations, as an example, the additive includes, but is not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (AND), tris(trimethylsilyl)phosphate (TMSP), and tris(trimethylsilyl)borate (TMSB).

The electrolyte solution may be prepared according to a conventional method in the art. For example, an organic solvent, an electrolyte sodium salt, and an optional additive may be mixed uniformly to obtain an electrolyte solution. An addition sequence of the materials is not particularly limited. For example, the electrolyte solution is obtained by adding the electrolyte sodium salt and the optional additive to the organic solvent and mixing uniformly. Alternatively, the electrolyte solution is obtained by first adding the electrolyte sodium salt to the organic solvent, then adding the optional additive to the organic solvent, and mixing uniformly.

### [Separator]

The separator is arranged between the positive electrode plate 123 and the negative electrode plate 121, mainly plays a role in preventing a short circuit between the positive electrode and the negative electrode, and can allow active ions to pass through. A type of the separator is not specifically limited in this application, and any well-known separator of a porous structure with good chemical stability and mechanical stability may be selected.

In some implementations, a material of the separator may be one or more selected from glass fiber, non-woven fabric, polyethylene, polypropylene, and polyvinylidene fluoride, but is not limited thereto. The separator may be a single-layer film or a multilayer composite film. When the separator is a multilayer composite film, materials of the layers are the same or different. In some implementations, an organic/inorganic composite coating, including a ceramic particle coating or a metal oxide coating, may be further arranged on the separator.

In some implementations, the positive electrode plate 123, the negative electrode plate 121, and the separator may form an electrode assembly 12 through a winding process or a lamination process.

In some implementations, the sodium battery cell 100 may include an outer packaging. The outer packaging may be used for packaging the electrode assembly 12 and the electrolyte solution.

In some implementations, the outer packaging of the sodium battery cell 100 may be a hard shell such as a hard plastic shell, an aluminum shell, a steel shell, or the like. Alternatively, the outer packaging of the sodium battery cell 100 may be a soft package such as a bag-type soft package. A material of the soft package may be plastics, and examples of the plastics may include polypropylene, polybutylene terephthalate, and polybutylene succinate.

A shape of the sodium battery cell 100 is not specifically limited in this application, and may be a cylinder, a cuboid, or any other shape. For example, FIG. 2 is a schematic diagram of a sodium battery cell according to an implementation of this application.

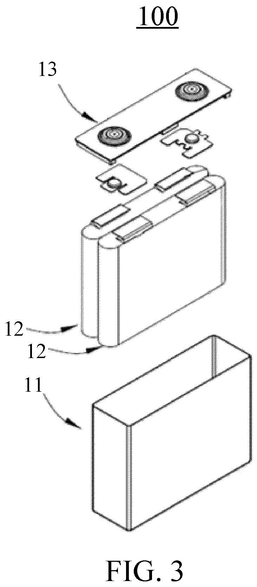

FIG. 3 is a schematic structural diagram of a sodium battery cell according to another implementation of this application. In some implementations, the outer packaging may include a housing 11 and a cover plate 13. The housing 11 may include a bottom plate and a side plate connected to the bottom plate, and the bottom plate and the side plate enclose to form an accommodating cavity. The housing 11 has an opening in communication with the accommodating cavity, and the cover plate 13 can cover the opening to close the accommodating cavity. A positive electrode, a negative electrode, and a solid electrolyte may form the electrode assembly 12 through a winding process or a lamination process. The electrode assembly 12 is packaged in the accommodating cavity. The sodium battery cell 100 may include one or more electrode assemblies 12, which may be selected by a person skilled in the art according to a specific actual requirement.

In some implementations, the sodium battery cell may be assembled into a battery module, and the battery module may include one or more sodium battery cells. A specific quantity may be selected by a person skilled in the art according to use and a capacity of the battery module.

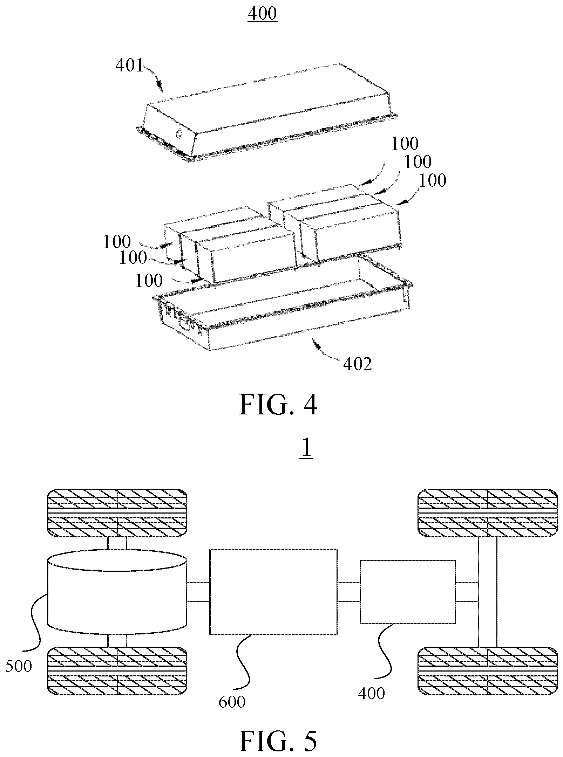

FIG. 4 is a schematic structural diagram of a battery 400 according to an implementation of this application. As shown in FIG. 4, in the battery 400, a plurality of sodium battery cells 100 may be arranged sequentially along a length direction of the battery 400. Certainly, the plurality of sodium battery cells may alternatively be arranged in any other manner. Further, the plurality of sodium battery cells 400 may be fixed by a fastener.

Still referring to FIG. 4, the battery 400 may include a battery box and a plurality of sodium battery cells 100 arranged in the battery box. The battery box includes an upper box body 401 and a lower box body 402, where the upper box body 401 can cover the lower box body 402 to form a closed space for accommodating the sodium battery cells 100. The plurality of sodium battery cells 100 may be arranged in the battery box in any manner.

In addition, this application further provides a power consuming apparatus, and the power consuming apparatus includes at least one of the sodium battery cell or the battery provided in this application. The sodium battery cell or the battery may be used as a power supply of the power consuming apparatus, or may be used as an energy storage unit of the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For example, FIG. 5 is a schematic structural diagram of a vehicle according to an implementation of this application. As shown in FIG. 5, the vehicle 1 may be a fuel vehicle, a gas vehicle, or a new energy vehicle. The new energy vehicle may be a pure electric vehicle, a hybrid electric vehicle, or an extended-range electric vehicle. A motor 500, a controller 600 and a battery 400 may be arranged inside the vehicle 1, and the controller 600 is configured to control the battery 400 to supply power to the motor 500. For example, the battery 400 may be arranged on the bottom, in the front, or in the rear of the vehicle 1. The battery 400 may be configured to supply power to the vehicle 1. For example, the battery 400 may be used as an operating power supply of the vehicle 1 and used for a circuit system of the vehicle 1, for example, may be used for operating electricity requirements during starting, navigation, and operation of the vehicle 1. In another embodiment of this application, the battery 400 can be used not only as the operating power supply of the vehicle 1, but also as a driving power supply of the vehicle 1, to alternatively or partially replace fuel or natural gas to provide driving power for the vehicle 1.

The power consuming apparatus may select the sodium battery cell or the battery according to a usage requirement thereof.

The power consuming apparatus may be a pure electric vehicle, a hybrid electric vehicle, or a plug-in hybrid electric vehicle. In order to meet requirements of the power consuming apparatus for high power and high energy density of the battery, the sodium battery cell or the battery may be used.

Another example of the power consuming apparatus may be a mobile phone, a tablet computer, or a notebook computer. The device usually needs to be light and thin, and the battery cell may be used as a power supply.

### [Example]

The following describes examples of this application. The examples described below are exemplary and are only intended to explain this application, and cannot be understood as a limitation to this application. When specific technologies or conditions are not indicated in the examples, the examples are carried out according to technologies or conditions described in the literature in the art or according to the product specifications. The reagents or instruments for which no manufacturers are noted are all common products commercially available from the market.

### [Example 1]

### (1) Preparation of a sodium-ion battery

(1.1) Preparation of a positive electrode: An active material sodium vanadium phosphate (Na₃V₂(PO₄)₃), a conductive agent acetylene black, and a binder polyvinylidene fluoride (PVDF) were dissolved in a solvent N-methyl pyrrolidone (NMP) at a mass ratio of 90%:5%:5%, and fully stirred and uniformly mixed to prepare a positive electrode active material; and the positive electrode active material uniformly coated a positive electrode current collector aluminum foil, and then was subjected to drying, cold pressing, and slitting to obtain a positive electrode plate.

(1.2) Preparation of a negative electrode: An active material hard carbon, lithium nitrate, a conductive agent acetylene black, a binder styrene-butadiene rubber (SBR), and a thickener sodium carboxymethyl cellulose (CMC) were fully stirred and uniformly mixed at a mass ratio of 89.5%:0.5%:4%:4%:2% in an appropriate amount of deionized aqueous solvent system to obtain a negative electrode active material; and the negative electrode active material coated a Cu foil, and then was subjected to drying, cold pressing, and slitting to obtain a negative electrode plate.

(1.3) Preparation of a separator: A PE porous polymer film was used as the separator.

(1.4) Electrolyte solution: Ethylene carbonate (EC) and ethyl methyl carbonate (EMC) were mixed at a mass ratio of 30%:70%, dissolved in 1M NaPF₆, and stirred uniformly.

(1.5) Assembly: The positive electrode plate, the separator, and the negative electrode plate were laminated sequentially, where the separator is located between the positive electrode and the negative electrode to play a role in separation, and were then wound to obtain an electrode assembly, and an electrolyte solution was added to the electrode assembly. Then hot pressing was performed at 100°C and 250 MPa for 2 min to obtain a sodium-ion battery.

### [Example 2]

A preparation process of the sodium-ion battery of Example 2 was basically the same as that of Example 1, and a difference lies in that: the mass ratio of the active material hard carbon, lithium nitrate, the conductive agent acetylene black, the binder styrene-butadiene rubber (SBR), and the thickener sodium carboxymethyl cellulose (CMC) in the negative electrode active material was 89%:1%:4%:4%:2%.

### [Example 3]

A preparation process of the sodium-ion battery of Example 3 was basically the same as that of Example 1, and a difference lies in that: the mass ratio of the active material hard carbon, lithium nitrate, the conductive agent acetylene black, the binder styrene-butadiene rubber (SBR), and the thickener sodium carboxymethyl cellulose (CMC) in the negative electrode active material was 85%:5%:4%:4%:2%.

### [Example 4]

A preparation process of the sodium-ion battery of Example 4 was basically the same as that of Example 1, and a difference lies in that: the mass ratio of the active material hard carbon, lithium nitrate, the conductive agent acetylene black, the binder styrene-butadiene rubber (SBR), and the thickener sodium carboxymethyl cellulose (CMC) in the negative electrode active material was 80%:10%:4%:4%:2%.

### [Example 5]

A preparation process of the sodium-ion battery of Example 5 was basically the same as that of Example 1, and a difference lies in that: the mass ratio of the active material hard carbon, lithium nitrate, the conductive agent acetylene black, the binder styrene-butadiene rubber (SBR), and the thickener sodium carboxymethyl cellulose (CMC) in the negative electrode active material was 87%:3%:4%:4%:2%.

### [Example 6]

A preparation process of the sodium-ion battery of Example 6 was basically the same as that of Example 1, and differences lie in that: (1) the mass ratio of the active material hard carbon, the conductive agent acetylene black, the binder styrene-butadiene rubber (SBR), and the thickener sodium carboxymethyl cellulose (CMC) in the negative electrode active material was 90%:4%:4%:2%; and (2) the mass ratio of the active material sodium vanadium phosphate (Na₃V₂(PO₄)₃), lithium iron phosphate (LiFePO₄), the conductive agent acetylene black, and the binder polyvinylidene fluoride (PVDF) in the positive electrode active material was 85%:5%:5%:5%.

### [Example 7]

A preparation process of the sodium-ion battery of Example 7 was basically the same as that of Example 1, and a difference lies in that: (1) the mass ratio of the active material hard carbon, the conductive agent acetylene black, the binder styrene-butadiene rubber (SBR), and the thickener sodium carboxymethyl cellulose (CMC) in the negative electrode active material was 90%:4%:4%:2%; and (2) 0.8 wt% of LiPF₆ was added to the electrolyte solution.

### [Example 8]

A preparation process of the sodium-ion battery of Example 8 was basically the same as that of Example 7, and a difference lies in that: 1 wt% of LiPF₆ was added to the electrolyte solution.

### [Example 9]

A preparation process of the sodium-ion battery of Example 9 was basically the same as that of Example 8, and a difference lies in that: 0.1 wt% of FEC was added to the electrolyte solution.

### [Example 10]

A preparation process of the sodium-ion battery of Example 10 was basically the same as that of Example 8, and a difference lies in that: 1 wt% of FEC was added to the electrolyte solution.

### [Example 11]

A preparation process of the sodium-ion battery of Example 11 was basically the same as that of Example 8, and a difference lies in that: 3 wt% of FEC was added to the electrolyte solution.

### [Example 12]

A preparation process of the sodium-ion battery of Example 12 was basically the same as that of Example 8, and a difference lies in that: 5 wt% of FEC was added to the electrolyte solution.

### [Example 13]

A preparation process of the sodium-ion battery of Example 13 was basically the same as that of Example 8, and a difference lies in that: 10 wt% of FEC was added to the electrolyte solution.

### [Comparative Example 1]

A preparation process of the sodium-ion battery of Comparative Example 1 was basically the same as that of Example 1, and a difference lies in that: the mass ratio of the active material hard carbon, the conductive agent acetylene black, the binder styrene-butadiene rubber (SBR), and the thickener sodium carboxymethyl cellulose (CMC) in the negative electrode active material was 90%:4%:4%:2%.

### [Comparative Example 2]

A preparation process of the sodium-ion battery of Comparative Example 2 was basically the same as that of Example 1, and a difference lies in that: 1 wt% of polystyrene (PS) was added to the electrolyte solution.

### [Comparative Example 3]

A preparation process of the sodium-ion battery of Comparative Example 3 was basically the same as that of Example 1, and a difference lies in that: 1 wt% of ethylene sulfate (DTD) was added to the electrolyte solution.

### [Comparative Example 4]

A preparation process of the sodium-ion battery of Comparative Example 4 was basically the same as that of Example 1, and a difference lies in that: 1 wt% of FEC was added to the electrolyte solution.

### (2) Performance representation of a sodium-ion battery

(2.1) Capacity retention rate: at a room temperature, a prepared sodium-ion battery was placed for 5 minutes, then charged to 4.2 V at a constant current rate of 1 C, then charged at a constant voltage until the current was less than or equal to 0.05 C, and placed for 5 minutes; and then was discharged to 2.0 V at a constant current rate of 1 C. This is a charge and discharge cycle. A discharge capacity at this time is a discharge capacity at the first cycle of the sodium-ion battery. The sodium-ion battery was charged and discharged 800 times, and the discharge capacity in each cycle was recorded. The capacity retention rate (%) of the sodium-ion secondary battery at the room temperature and after 800 cycles at 1 C/1 C=a discharge capacity of the 800^{th} cycle/a discharge capacity of the first cycle×100%. For test results, reference may be made to Table 1.

(2.2) Direct current impedance test: at a room temperature, a lithium-ion battery was placed for 5 min, charged to 4.2 V at a constant current rate of 1 C, and then charged at a constant voltage until the current was less than or equal to 0.05 C, so that a state of charge (SOC) of the lithium-ion battery was 100%. After being placed for 5 min, the lithium-ion battery was discharged at a constant current rate of 1 C to adjust the SOC of the lithium-ion battery to 50%. The lithium-ion battery with 50% SOC was further placed for 10 min, and discharged at a constant current rate of 4C for 30s. A voltage U₁ at the last 1s of placement, a voltage U₂ at the last 1s of discharging at the constant current rate of 4 C, and a current I of discharging at the constant current rate of 4 C were recorded. Direct current impedance R of the lithium-ion battery at 25°C and discharged for 30s at the constant current rate of 4 C with 50% SOC= (U₁-U₂)/I. For test results, reference may be made to Table 1.

(2.3) Li/Na ratio in the negative electrode plate: At a room temperature, the sodium-ion battery was charged to 4.2 V at a constant current of 1 C, then charged at a constant voltage of 4.2 V until the current was less than 0.05 C, and then discharged to 2.0 V at 0.33 C. The fully discharged sodium-ion battery was disassembled to take out the negative electrode plate, and then content of lithium and content of sodium on the negative electrode film were tested by using inductively coupled plasma atomic emission spectroscopy with reference to EPA 6010D-2014, and then W=the content of Li/the content of Na was calculated. For test results, reference may be made to Table 1.

**Table 1 Performance of sodium-ion batteries of Examples 1 to 13 and Comparative Examples 1 to 4**

| Group | Type of Lithium-containing compound | Li/Na | Content of FEC in Electrolyte solution | Direct current impedance (mΩ) | Capacity retention rate |
|---|---|---|---|---|---|
| Example 1 | Lithium nitrate | 0.001 | 0% | 0.351 | 76% |
| Example 2 | Lithium nitrate | 0.02 | 0% | 0.345 | 76% |
| Example 3 | Lithium nitrate | 0.5 | 0% | 0.363 | 87% |
| Example 4 | Lithium nitrate | 2 | 0% | 0.486 | 86% |
| Example 5 | Lithium nitrate | 0.03 | 0% | 0.346 | 77% |
| Example 6 | Lithium iron phosphate | 0.03 | 0% | 0.341 | 79% |
| Example 7 | Lithium hexafluorophosphate | 0.03 | 0% | 0.342 | 79% |
| Example 8 | Lithium hexafluorophosphate | 0.05 | 0% | 0.339 | 87% |
| Example 9 | Lithium hexafluorophosphate | 0.05 | 0.10% | 0.347 | 85% |
| Example 10 | Lithium hexafluorophosphate | 0.05 | 1% | 0.406 | 86% |
| Example 11 | Lithium hexafluorophosphate | 0.05 | 3% | 0.437 | 84% |
| Example 12 | Lithium hexafluorophosphate | 0.05 | 5% | 0.548 | 80% |
| Example 13 | Lithium hexafluorophosphate | 0.05 | 10% | 0.555 | 75% |
| Comparative Example 1 | / | 0 | 0% | 0.385 | 70% |
| Comparative Example 2 | / | 0 | 0% | 0.373 | 71% |
| Comparative Example 3 | / | 0 | 0% | 0.486 | 79% |
| Comparative Example 4 | / | 0 | 0% | 0.514 | 78% |

With reference to Examples 1 to 5 and Comparative Examples 1 to 4, it can be learned that, compared with a commonly used sulfur-containing compound PS or DTD, the addition of lithium nitrate to the sodium-ion battery can effectively improve the internal resistance of the battery and improve the capacity retention rate to improve the cycle performance of the sodium-ion battery.

With reference to Examples 1 to 5, it can be learned that when Li/Na in the negative electrode plate is less than 0.001, that is, the content of lithium in the negative electrode plate is excessively small, the cycle performance of the sodium-ion battery is not significantly improved; and when Li/Na in the negative electrode plate is greater than 1, that is, the content of lithium in the negative electrode plate is excessively large, interface impedance of the negative electrode will be deteriorated. Therefore, by maintaining Li/Na at a range of 0.001 to 1, the cycle performance of the sodium-ion battery can be improved, and impact on performance of the sodium-ion battery in other aspects can be avoided.

With reference to Examples 6 and 7, it can be learned that the addition of the lithium-containing compound to the positive electrode and the electrolyte solution can also improve the cycle performance of the sodium-ion battery.

With reference to Examples 8 to 13, it can be learned that the cycle performance of the sodium-ion battery can be further improved by further adding FEC with mass content of 0.1% to 5% to the sodium-ion battery.

With reference to Examples 1 to 13, it can be learned that various lithium-containing compounds, such as lithium nitrate, lithium iron phosphate, and lithium hexafluorophosphate, can all play a role in improving the cycle performance of the sodium-ion battery.

It should be noted that this application is not limited to the foregoing embodiments. The foregoing embodiments are exemplary only, and any implementation within the scope of the technical solutions of this application that has substantially the same composition and has the same effects as the technical idea falls within the technical scope of this application. In addition, other manners constructed by applying various variations that can be conceived by a person skilled in the art to the embodiments without departing from the spirit of this application, and combining some of the constituent elements in the embodiments are also included in the scope of this application.

## Claims

1. A sodium battery cell, comprising:
a negative electrode plate, a positive electrode plate, and an electrolyte solution, wherein
the negative electrode plate comprises a negative electrode current collector and a negative electrode film layer;
the positive electrode plate comprises a positive electrode current collector and a positive electrode film layer; and
at least one of the negative electrode film layer, the positive electrode film layer, and the electrolyte solution comprises a lithium-containing compound.

2. The sodium battery cell according to claim 1, wherein the negative electrode film layer comprises a negative electrode active material core and the lithium-containing compound covering the negative electrode active material core.

3. The sodium battery cell according to claim 2, wherein the negative electrode active material core comprises amorphous carbon.

4. The sodium battery cell according to any one of claims 1 to 3, wherein based on 100 parts by weight of the negative electrode film layer, content of the lithium-containing compound ranges from 0.05 to 15 parts by weight, and optionally ranges from 0.1 to 5 parts by weight.

5. The sodium battery cell according to claim 1, wherein based on 100 parts by weight of the positive electrode film layer, content of the lithium-containing compound ranges from 0.1 to 20 parts by weight, and optionally ranges from 0.5 to 10 parts by weight.

6. The sodium battery cell according to claim 1, wherein based on 100 parts by weight of the electrolyte solution, content of the lithium-containing compound ranges from 0.01 to 15 parts by weight, and optionally ranges from 0.1 to 5 parts by weight.

7. The sodium battery cell according to any one of claims 1 to 6, wherein in the negative electrode plate, a ratio of mass content of lithium to mass content of sodium ranges from 0.0001 to 1, and optionally ranges from 0.01 to 0.5.

8. The sodium battery cell according to any one of claims 1 to 7, wherein the lithium-containing compound comprises at least one of lithium alkyl carbonate, lithium fluoride, lithium carbonate, lithium sulfate, lithium nitrate, lithium hydroxide, lithium chloride, lithium perchlorate, lithium hexafluorophosphate, lithium difluorophosphate, lithium phosphate, lithium tetrafluoroborate, lithium bisoxalate borate, lithium difluorooxalate borate, lithium difluorooxalate phosphate, lithium iron phosphate, lithium cobaltate, lithium nickel manganese cobalt oxide, and lithium manganate.

9. The sodium battery cell according to any one of claims 1 to 8, wherein the electrolyte solution comprises fluoroethylene carbonate.

10. The sodium battery cell according to claim 9, wherein based on 100 parts by weight of the electrolyte solution, content of the fluoroethylene carbonate ranges from 0.01 to 10 parts by weight, and optionally ranges from 0.1 to 5 parts by weight.

11. A battery, comprising the sodium battery cell according to any one of claims 1 to 10.

12. A power consuming apparatus, comprising the battery according to claim 11.
